# EUROPÄISCHE PATENTSCHRIFT

(11) **EP 0 750 830 B1**
(45) Veröffentlichungstag und Bekanntmachung des Hinweises auf die Patenterteilung: **26.05.1999**
(21) Anmeldenummer: 95912140.1
(22) Anmeldetag: 15.03.1995
(51) Int. Cl.: H04Q 11/04, H04Q 3/68

(54) **MODULAR STRUKTURIERTES ATM-KOMMUNIKATIONSSYSTEM**
ATM COMMUNICATION SYSTEMS WITH A MODULAR STRUCTURE
SYSTEME DE COMMUNICATION A MODE DE TRANSFERT ASYNCHRONE A STRUCTURE MODULAIRE

(30) Priorität: 16.03.1994 DE 4408975
(43) Veröffentlichungstag der Anmeldung: 02.01.1997
(73) Patentinhaber: SIEMENS AKTIENGESELLSCHAFT, 80333 München (DE)
(72) Erfinder: HARTMANN, Siegfried, D-85391 Allershausen (DE); SCHRAMM, Heinrich, D-82024 Taufkirchen (DE); ROMBACH, Horst, D-81476 München (DE); LESCH, Hilmar, D-82515 Wolfratshausen (DE)
(86) Internationale Anmeldenummer: DE9500365
(87) Internationale Veröffentlichungsnummer: WO9525412

(56) Entgegenhaltungen:
- EP-A- 0 358 597
- IEEE IN HOUSTON. GLOBECOM '93. IEEE GLOBAL TELECOMMUNICATIONS CONFERENCE, INCLUDING A COMMUNICATIONS THEORY MINI-CONFERENCE. TECHNICAL PROGRAM CONFERENCE RECORD (CAT. NO.93CH3250-8), PROCEEDINGS OF GLOBECOM '93. IEEE GLOBAL TELECOMMUNICATIONS CONFERE ISBN 0-7803-0917-0, 1993, NEW YORK, NY, USA, IEEE, USA Seiten 1454 - 1460 vol.3 ENG K Y ET AL 'An ATM cross-connect system for broadband trials and applications'
- IEICE TRANSACTIONS, NOV. 1991, JAPAN, Bd.E74, Nr.11, ISSN 0917-1673 Seiten 3645 - 3651 SATO F ET AL 'Requirements for nodal system architecture'

## Beschreibung

Modular strukturierte ATM-Kommunikationssysteme dienen der Verbindung von Kommunikationsendgeräten mit hohen Übermittlungsraten in privaten und öffentlichen Kommunikationsnetzen. Die Übermittlung und Vermittlung der Nachrichten erfolgt gemäß dem Asynchron-Transfer-Modus, bei dem die zu übermittelnden Informationen paketweise, d.h. mit Paketen fester Länge (Zellen) gemäß dem CCITT-Standard I.361 über- bzw.vermittelt werden. International standardisierte Transportbitraten sind derzeit 155 und 622 Mbit/s. Mit Hilfe von in den Zellköpfen der Zellen eingefügten Kanal- und Wegeinformationen werden die Zellen über einen virtuellen Übertragungskanal von einem Kommunikationsendgerät über ein Kommunikationssystem zu einem bestimmten Kommunikationsendgerät übermittelt. Der Übertragungskanal wird durch eine Teilnehmersignalisierung - wie in den bekannten Zeitmultiplex-Kommunikationssystemen- oder durch eine administrative Eingabe am Kommunikationssystem eingerichtet und bleibt für die Dauer der Verbindung logisch erhalten. Die Bandbreite eines derartigen Übertragungskanals ist flexibel und wird beim Verbindungsaufbau beantragt. Derartige Grundfunktionen von ATM-Kommunikationssystemen sind aus der Druckschrift "ATM Technologie für zukünftige Breitbandnetze", Siemens, 1992 bekannt.

Eine Struktur eines ATM-Kommunikationssystems mit derartigen Funktionen ist aus telcom report 13, "Mit ATM zur bitvariablen Kommunikation", 1990, Seite 4 - 7 bekannt. Bei dieser Struktur ist das ATM-Kommunikationssystem bzw. die ATM-Vermittlungseinrichtung durch eine Teilnehmeranschlußmodule aufweisende Anschlußgruppe, durch ein ATM-Koppelfeld und durch eine zentrale Steuerung gebildet, wobei die zentrale Steuerung für eine Übermittlung von vermittlungs-, betriebs- und sicherheitstechnischen Informationen direkt mit den Teilnehmeranschlußmodulen verbunden ist. Bei dieser Konzeption ist eine Konfigurationsänderung des Kommunikationssystems mit erheblichen Hardware- und Software-Änderungen verbunden.

Eine weiteres ATM-Kommunikationssystem zur Vermittlung paketierter Zellen zwischen ATM-Kommunikationsendgeräten über Wähl- oder Festverbindungen ist aus der Druckschrift IEEE IN HOUSTON GLOBECOM '93, IEEE GLOBAL TELECOMMUNICATIONS CONFERENCE, 1993, New York, NY, USA, Vol. 3, Seiten 1454-1460; K.Y. ENG et al. bekannt. In diesem sind an ein mit mehreren bidirektionalen Anschlüssen versehenes, nach dem ATM wirkendes ATM-Koppelfeld jeweils über eine als "Fabric Interface" bezeichnete Multiplexer-/Demultiplexer-Stufe mehrere mit SDH-Teilnehmerschnittstellen ausgestattete Teilnehmeranschlußmodule, sogenannte "Line-cards" angeschlossen. Auch bei dieser Konzeption bewirken insbesondere Konfigurationsänderungen der vermittlungstechnischen Software erhebliche Hard- und Softwareänderungen.

Des weiteren wird in der europäischen Patentschrift EP-A2 0 358 597 ein modulares Kommunikationssystem mit einer Vermittlungseinrichtung und mit einem eine Steuereinrichtung realisierenden Personalcomputer beschrieben, wobei in der Vermittlungseinrichtung ein Koppelfeld integriert ist, dessen Anschlüsse mit Teilnehmeranschlußmodulen verbunden sind. Sowohl in der Vermittlungs- als auch in der Steuereinrichtung sind entsprechende Schnittstellen definiert, die ein Informations- bzw. Datenaustausch zwischen beiden Einheiten ermöglichen. Die Steuereinrichtung gemäß offenbarter Anordnung dient der Erweiterung einer vorhandenen Vermittlungseinrichtung um beliebige zusätzliche Leistungsmerkmale unter Gewährleistung der notwendigen Betriebssicherheit. Folglich verursachen Software-Änderungen, insbesondere der Vermittlungs-Software, in der Vermittlungseinrichtung ebenfalls Software-Änderungen in der Steuereinrichtung.

Die der Erfindung zugrundeliegende Aufgabe ist darin zu sehen, eine Struktur eines ATM-Kommunikationssystems mit größerer Modularität und flexiblerer Konfiguration zu schaffen. Die Aufgabe wird durch die Merkmale des Anspruchs 1 gelöst.

Der wesentliche Aspekt des erfindungsgemäßen Kommunikationssystems ist darin zu sehen, daß das Kommunikationssystem in zwei Einrichtungen, nämlich in eine Vermittlungs- und eine Steuereinrichtung aufgeteilt ist und die Steuereinrichtung wie ein ATM-Kommunikationsendgerät an die Vermittlungseinrichtung angeschlossen ist. In der Vermittlungseinrichtung werden die Zellen zwar mit Hilfe des ATM-Koppelfeldes vermittelt, jedoch wird die vermittlungstechnische Steuerung durch das in der Steuereinrichtung implementierte Vermittlungsprogramm bewirkt. Für die Informationsübermittlung ist die Vermittlungseinrichtung mit einem Kommunikationsmodul und die Steuereinrichtung mit einem Kommunikationsadapter ausgestattet. Im Kommunikationsmodul und in der Steuereinrichtung ist hierfür im Sinne einer Übermittlung von vermittlungs-, sicherheits- und verwaltungstechnischen Informationen eine Transportschnittstelle, sowie eine vermittlungs-, sicherheits- und eine betriebstechnische Schnittstelle definiert. Durch diese Definition wird eine weitgehende Entkopplung von Hard- und Software erreicht und folglich eine erhebliche Steigerung der Modularität und Konfigurationsfreiheit von ATM-Kommunikationssystemen, insbesondere kleinerer ATM-Kommunikationssysteme, bewirkt. Die Steuereinrichtung ist vorteilhaft durch einen handelsüblichen Personalcomputer realisiert, in den schaltungstechnisch lediglich eine Adaptereinrichtung eingebracht ist. In den Programmspeichern des Personalcomputers sind alle wesentlichen Programme zur vermittlungs-, betriebs- und sicherheitstechnischen Steuerung der Vermittlungseinrichtung gespeichert. Durch diese Konzeption der Steuereinrichtung in einem Personalcomputer ist zum einem ei ne besonders wirtschaftliche Realisierung erreicht und zum anderen kann auf eine separates Bedienterminal verzichtet werden.

Das Kommunikationsmodul ist vorteilhaft mit einem Bussystem ausgestattet, an das ein Zellkopfmodul mit einem zugeordneten RAM-Speicher, in dem zur Selbststeuerung der vermittlungs-, betriebs- und sicherheitstechnischen Informationen enthaltende Zellen durch das Koppelfeld vorgesehene interne Zellköpfe gebildet und an die Zellen angefügt werden, sowie ein weiteres Zellkopfmodul mit einem zugeordneten RAM-Speicher angeschlossen, in dem vor einer Übermittlung der vermittlungs-, betriebs- und sicherheitstechnische Informationen enthaltende Zellen an die Steuereinrichtung die internen Zellköpfe entfernt werden. Desweiteren ist an das Bussystem im Sinne eines Packens der zu übermittelnden Informationen in Zellen und zum Entpacken der Informationen aus übermittelten Zellen ein Segmentierungs- und Desegmentierungsmodul und ein das Kommunikationsmodul steuerndes und überwachendes Mikroprozessorsystem sowie ein Taktaufbereitungsmodul angeschlossen, in dem aus den vom Taktmodul übermittelten Referenztaktsignalen die Übermittlungstakte für eine Übertragung an das ATM-Koppelfeldmodul und die Steuereinrichtung abgeleitet und an die Komponenten des Kommunikationsmoduls verteilt werden - Anspruch 2. Durch diese vorteilhafte Konzeption ist zusätzlich eine wirtschaftliche Realisierung durch handelsübliche und kundenprogrammierbare integrierte Schaltkreise möglich.

Gemäß einer weiteren vorteilhaften Ausgestaltung des erfindungsgemäßen Kommunikationssystems ist der Kommunikationsadapter durch ein einen ATM-Teilnehmeranschluß realisierendes Leitungsmodul und ein einen EISA-Busanschluß realisierendes EISA-Steuermodul gebildet, wobei ein EISA-Kommunikationsbus im Personalcomputer angeordnet ist. Durch diese Konzeption wird ein hoher Datendurchsatz bei wirtschaftlichem Realisierungsaufwand erreicht.

Im folgenden wird das erfindungsgemäße Kommunikationssystem anhand von vier Blockschaltbildern näher erlautert. Dabei zeigen
- FIG 1: die Struktur eines modular strukturierten ATM-Kommunikationssystems,
- FIG 2: den Aufbau des Kommunikationsmoduls,
- FIG 3: den Aufbau des Kommunikationsadapters und
- FIG 4: den Aufbau des Teilnehmeranschlußmoduls.

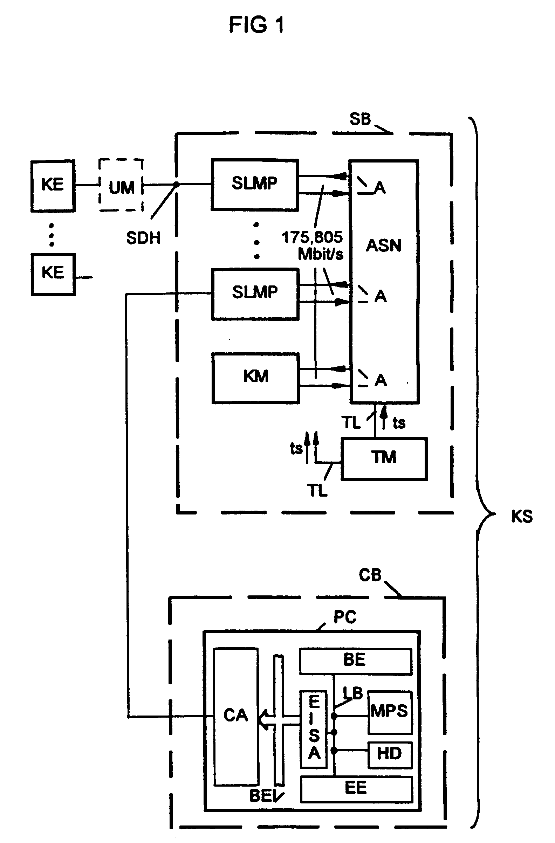

Figur 1 zeigt ein Kommunikationssystem KS, das durch eine Vermittlungseinrichtung SB und durch eine Steuereinrichtung CB gebildet ist.

In der Vermittlungseinrichtung SB ist ein nach dem Asynchron-Transfer-Modus wirkendes ATM-Koppelfeldmodul ASN, mehrere Teilnehmeranschlußmodule SLMP, ein Kommunikationsmodul KM und ein Taktmodul TM angeordnet.

Das ATM-Koppelfeldmodul ASN ist beispielsweise mit sechzehn bidirektionalen Anschlüssen A mit einer Übertragungsgeschwindigkeit von je 175,805 Mbit/s ausgelegt. Für die Vermittlung von nach dem Asynchron-Transfer-Modus gebildeten Zellen werden diese entsprechend den mitgeführten vermittlungstechnischen Informationen über das ATM-Koppelfeldmodul ASN gemäß dem Selbstvermittlungsprinzip vermittelt. Dies bedeutet, daß eine Zelle mit Hilfe der mitgeführten vermittlungstechnischen Informationen - z.B. in einem vorangestellten, zusatzlichen Zellkopf - selbständig über das Koppelfeldmodul ASN vermittelt werden. An jeden der sechzehn Anschlüsse A des prozessorgesteuerten ATM-Koppelfeldmoduls ASN werden die Informationen physikalisch durch "Differential shifted ECL(Emitter Coupled Logic)-Signale, NRZ(Non Return to Zero)-codiert übertragen. Das ATM-Koppelfeldmodul ASN ist beispielsweise gemäß dem in der EP 0 329 005 B1 offenbarten Koppelfeld realisiert.

An jeden der sechzehn Anschlüsse A ist ein Teilnehmeranschlußmodul SLMP oder ein Kommunikationsmodul KM anschließbar, wobei in einer Vermittlungseinrichtung SB ein Kommunikationsmodul KM vorgesehen ist. In der Figur 1 sind beispielhaft für maximal fünfzehn anschließbare Teilnehmeranschlußmodule SLMP zwei dargestellt.

Im Taktmodul TM werden für den Betrieb des ATM-Koppelfeldmoduls ASN, der Teinehmeranschlußmodule SLMP und des Kommunikationsmoduls KM erforderliche Taktsignale ts gebildet und über separate Taktleitungen TL an die jeweiligen Komponenten der Vermittlungseinrichtung SB übertragen. Insbesondere sind diese Taktsignale ts für den Betrieb der in den Komponenten SLMP, ASN, KM der Vermittlungseinrichtung SB eingesetzten Mikroprozessoren und für die Übertragung der Informationen über die vermittlungseinrichtungsgemäßen Schnittstellen vorgesehen.

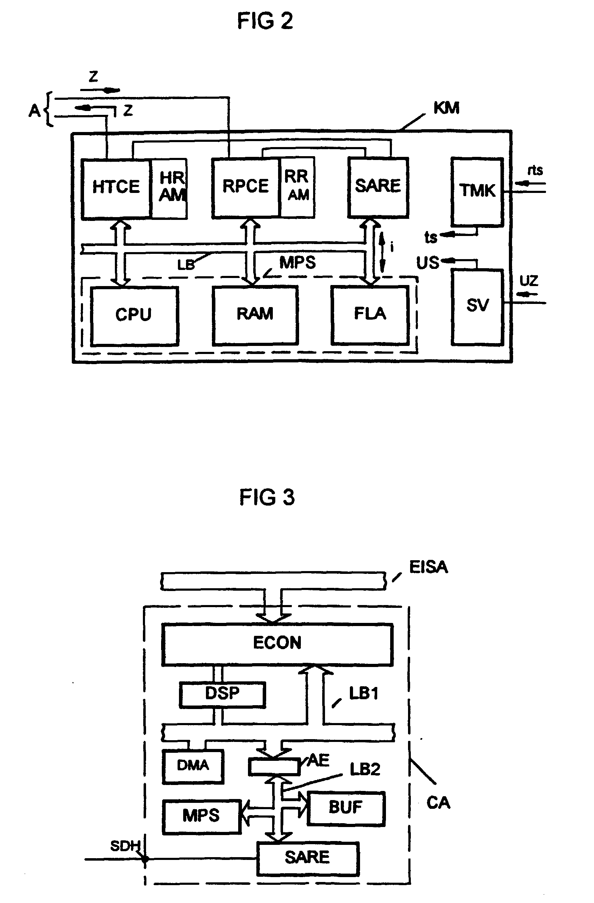

Für den Anschluß von nach dem Asynchron-Transfer-Modus wirkenden Kommunikationsendgeraten KE sind die Teinehmeranschlußmodule SLMP mit einer SDH(Synchrone Digitale Hierarchie)-Schnittstelle SDH mit einer Übertragungsgeschwindigkeit von 155 Mbit/s ausgestattet. Die Daten- bzw. Informationsübermittlung über die SDH-Schnittstelle SDH wird gemäß der CCITT-Empfehlung I.121 (User Network Interfac UNI) im Synchron-Transfer-Modus (STM-1) mit einer Übertragungsgeschwindigkeit von 155,52 Mbit/s durchgeführt. Der Aufbau und die Wirkungsweise der Teilnehmeranschlußmodule SLMP ist in Fig. 3 naher erlautert.

Durch ein zwischen das Kommunikationsendgerät KE und das Teilnehmeranschlußmodul SLMP eingefügtes, strichliert dargestelltes Rechteck sind Übertragungsmodule UM angedeutet, mit deren Hilfe entfernte Kommunikationsendgeräte KE an die Vermittlungseinrichtung SB angeschlossen werden. Die Übertragungsmodule UM enthalten übertragungstechnische Einrichtungen - nicht dargestellt - für eine elektrische Übertragung der zellenorientierten Informationen über Koaxialkabel gemäß der CCITT-Empfehlung G.703 oder für eine optische Übertragung über Lichtwellenleiter nach den CCITT-Empfehlungen G.957/958.

Derartig breitbandige Kommunikationsendgerate KE für den Anschluß an die Vermittlungseinrichtung SB sind durch eine Vielzahl von Einrichtungen realisierbar. Beispielhaft sind Anschlüsse an weitere ATM-Kommunikationssysteme KS, Adapter für den Anschluß von lokalen Netzen, ISDN-Vermittlungseinrichtungen - z.B. an das HICOM-Vermittlungssystem- und ATM-Workstations erwähnt.

Mit Hilfe des Kommuniktionsmoduls KM werden die von der Steuereinrichtung CB oder an diese zu übermittelnde Zellen gesteuert. Hierzu ist im Kommuniktionsmodul KM eine Schicht 2 - Funktion entsprechend dem ISO - Schichtenmodell und eine für die Vermittlung der Zellen innerhalb der Vermittlungseinrichtung SB vorgesehene Schicht 3-Funktion realisiert. Des weiteren umfaßt das Kommuniktionsmodul KM eine vermittlungstechnische Subfunktion, mit deren Hilfe von der Steuereinrichtung CB und umgekehrt übermittelte vermittlungstechnische, administrative und beriebstechnische Meldungen in vermittlungseinrichtungskonforme Meldungen, d.h. auf die physikalische Ausgestaltung der Vermittlungseinrichtung SB bezogen, transformiert werden.

Für die Kommunikation der Vermittlungseinrichtung SB mit der Steuereinrichtung CB ist diese mit einem Kommunikationsadapter CA ausgestattet. Der Kommunikationsadapter CA ist in einem die Steuereinrichtung CB realisierenden Personalcomputer PC angeordnet. Der durch einen handelsüblichen Personalcomputer realisierte Personalcomputer PC weist bekannterweise eine Bildschirmeinrichtung BE, eine Eingabeeinrichtung EE, Massenspeichereinrichtungen HD - z.B. Hard Disks - und ein Mikroprozessorsystem MPS auf. Zusätzlich ist eine einen EISA-Bus BEI realisierendes Adaptionsmodul EISA im Personalcomputer PC integriert, wobei der Kommunikationsadapter CA an den EISA-Bus BEI angeschlossen ist. Die Komponenten BE, EE, MPS, HD, EISA des Personalcomputers PC kommunizieren über einen internen lokalen Bus LB. Beim EISA-Bus handelt es sich um einen vom interen, lokalen Bus LB entkoppelten Bus mit einer Bitbreite von 32 Bit und einer Transferrate von 33 Mbyte.

Fig. 2 zeigt in einem Blockschaltbild das Kommunikationsmodul KM. In diesem ist ein Bussystem LB eines Mikroprozessorsystems MPS angeordnet. Das Mikroprozessorsystem MPS ist durch einen handelsüblichen Mikroprozessor CPU - beispielsweise ein Mikroprozessor SAB 80 386 DX der Fa. Siemens - sowie durch einen Arbeitsspeicher RAM und einen Programmspeicher FLA gebildet. Der Programmspeicher FLA ist vorzugsweise durch ein Flasch-Memory realisiert. Die Komponenten CPU, RAM, FLA des Mikroprozessorsystems MPS sind jeweils an das durch Adress-Daten- und Steuerleitungen gebildete Bussystem LB angeschlossen.

Für das Aussenden und Empfangen von Zellen Z an bzw. von dem Anschluß A des ATM-Koppelfeldmodules sind im Kommunikationsmodul KM zwei jeweils mit dem Bussystem LB verbundene Zellkopfmodule HTCE, RPCE vorgesehen. Mit Hilfe des ersten Zellkopfmoduls HTCE werden an die zu übermittelnden Zellen Z im Sinne einer selbststeuernden Vermittlung über das ATM-Koppelfeldmodul ASN intern gebildete Zellköpfe angefügt. Mit Hilfe dieser internen Zellköpfe werden, wie in Fig. 1 erlautert, die Zellen Z durch das ATM-Koppelfeldmodul ASN gesteuert. Mit Hilfe des zweiten Zellkopfmodules RPCE werden die internen Zellköpfe der vom ATM-Koppelfeldmodul ASN übermittelten Zellen Z entfernt. Zellen Z, deren Empfänger sich innerhalb der Vermittlungseinrichtung SB befinden, weisen in dem internen Zelkopf weitere spezielle Eintrage auf, mit deren Hilfe weitere, interne Zellköpfe im Sinne einer Übermittlung an eine Komponente der Vermittlungseinrichtung VE gebildet, an die entsprechende Zelle Z angefügt und über das ATM-Koppelfeldmodul ASM an die jeweilige Komponente übermittelt werden. Für die Generierung der internen Zellköpfe bzw. deren Entfernen unter Echtzeitbedingungen sind die hierfür erforderlichen zusatzlichen Daten in jeweils den Zellkopfmodulen HTCE, RPCE zugeordneten RAM-Speichern HRAM, RRAM gespeichert. Die beiden Zellkopfmodule HTCE, RPCE sind beispielsweise in jeweils einem ASIC (Application Specified Integrated Circuits) realisiert.

An das Bussystem LB ist desweiteren ein Segmentierungs- und Desegmentierungsmodul SARE angeschlossen. Mit Hilfe dieses Segmentierungs- bzw. Desegmentierungsmoduls SARE werden gemäß der CCITT-Empfehlung I. 363 die vom Mikroprozessorsystem MPS gebildeten Informationen in Zellen Z verpackt bzw. die von einem anderem Modul in der Vermittlungseinrichtung SB oder der Steuereinrichtung CB übermittelten Zellen Z entpackt, d.h. die Informationen aus den Zellen Z entnommen und an das Mikroprozessorsystem MPS übermittelt. Diese Segmentierungs- bzw. Desegmentierungsfunktion ist dann erforderlich, wenn Informationen im Sinne einer Bewertung oder Reaktion im bzw. durch das Mikroprozessorsystem MPS an dieses übermittelt oder von diesem an andere Module übertragen werden.

Mit Hilfe des Mikroprozessorsystems MPS werden die von der Steuereinrichtung CB oder den Komponenten SLMP, ASN, TM übermittelten vermittlungstechnischen, betriebstechnischen oder sicherheitstechnischen Informationen bewertet und in Abhängigkeit von dem Inhalt der übermittelten Informationen entsprechende Reaktionen eingeleitet oder weitergeleitet.

Im Kommunikationsmodul KM ist ein weiteres Taktmodul TMK sowie eine Stromversorgung SV vorgesehen. Mit Hilfe des weiteren Taktmoduls TMK werden aus den vom Taktmodul TM übermittelten Referenztaktsignalen rts die für die Taktsteuerung der beiden Zellkopfmodule HTCE, RPCE und des Segmentierungs- und Desegmentierungsmodul SARE erforderlichen Taktsignale ts abgeleitet und an diese übermittelt. Die für den Betrieb der Komponenten des Kommunikationsmoduls KM erforderlichen Spannungen US werden mit Hilfe der Stromversorgung SV aus einer zentralen Stromversorgung UZ abgeleitet.

Fig. 3 zeigt in einem Blockschaltbild den Kommunikationsadapter CA - durch strichlierte Linien umfaßt. Mit Hilfe eines im Kommunikationsadapter CA angeordneten EISA-Steuermoduls ECON wird der Anschluß an den Personalcomputer-internen EISA-Kommunikationsbus EISA hergestellt. Der durch Daten-, Adress- und Steuerleitungen gebildete EISA-Kommunikationsbus EISA weist eine Bitbreite von 32 Bit, eine Taktfrequenz von 8,33 MHz und eine Transferrate von 33 Mbit/s auf. Das EISA-Steuermodul ECON stellt das Bindeglied zu einem ersten lokalen Bus LB1 dar. Dieser ebenfalls durch Daten-, Steuer- und Adressleitungen gebildete erste lokale Bus LB1 weist eine Bitbreite von 16 Bit und eine Taktfrequenz von 20 MHz auf. Zur Geschwindigkeitsanpassung zwischen dem EISA-Kommunikationsbus EISA und dem ersten lokalen Bus LB1 ist zusätzlich ein dynamischer Speicher DSP eingefügt.

Zwischen dem ersten lokalen Bus LB1 und einem zweiten lokalen Bus LB2 ist für den dynamischen Datenaustausch eine Anpassungseinheit AE vorgesehen. Mit Hilfe dieser Anpassungseinheit AE werden die zu übermittelnden Daten von dem ersten lokalen Bus LB1 an den 32 Bit breiten, zweiten lokalen Bus LB2 mit einer Taktfrequenz von 20 MHz angepaßt und umgekehrt. Sowohl der erste als auch der zweite lokale Bus LB1, LB2 werden durch das Mikroprozessorsystem - beispielsweise durch ein Mikroprozessorsystem SAB 80 486 der Fa. Siemens realisiert - gesteuert. Für den schnellen Zugriff auf den im Mikroprozessorsystem MPS angeordnete Programm- und Datenspeicher ist an den ersten Bus LB1 eine DMA (direct memory access) - Steuerung DMA angekoppelt. Die DMA-Steuerung DMA ist beispielsweise durch den integrierten Schaltkreis SAB 82 380 der Firma Siemens realisiert.

Für die Realisierung der Teilnehmeranschlußschnittstelle SDH ist im Kommunikationsadapter CA ein Segmentierungs- und Desegmentierungsmodul SARE vorgesehen. Mit Hilfe dieses Segmentierungs- und Desegmentierungsmoduls SARE werden die zu übermittelnden Informationen in Zellen Z verpackt bzw. entpackt. Für die Zwischenspeicherung der von dem Segmentierungs- und Desegmentierungsmodul SARE auszusendenden bzw. der empfangenen Informationen bzw. Zellen Z ist an den zweiten lokalen Bus LB2 ein Zwischenspeicher BUF angeschlossen. An das Segmentierungs- und Desegmentierungsmodul SARE ist eine ATM-Übertragungstechnik - nicht dargestellt - für eine elektrische Übertragung der Signale über eine Koaxialleitung oder eine optische Übertragung über Lichtwellenleiter anschließbar - siehe Erlauterungen zu Fig 2.

Der Kommunikationsadapter CA dient zur Anbindung eines Personalcomputers - z.B. einer Unix-Work-Station - an die Vermittlungseinrichtung SB. Der Kommunikationsadapter CA kann sowohl zur Verbindung eines als Steuereinrichtung CB ausgebildeten Personalcomputers PC bzw. einer Work-Station als auch zur Verbindung von Multimedia-Kommunikationsendgeräten KE - z.B. Multimedia-Work-Stations - untereinander zur Übertragung von Audio, Video und Datensignalen eingesetzt werden.

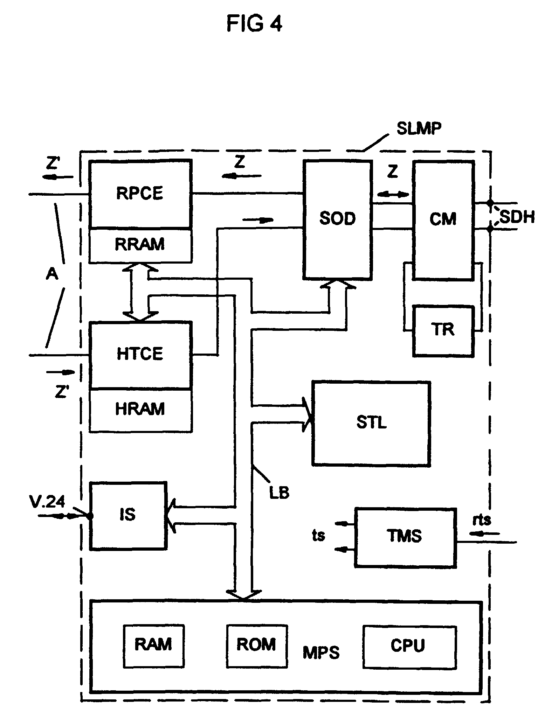

Fig. 4 zeigt den Aufbau eines Teilnehmeranschlußmoduls SLMP. Für das Aussenden und Empfangen von Zellen Z an bzw. von dem Anschluß A des ATM-Koppelfeldmodules ASN sind im Teilnehmeranschlußmodul SLMP zwei mit einem lokalen Bussystem LB verbundene Zellkopfmodule HTCE, RPCE vorgesehen - siehe auch Fig. 2. Mit Hilfe des ersten Zellkopfmoduls HTCE werden an die zu übermittelnden Zellen Z im Sinne einer selbststeuernden Vermittlung über das ATM-Koppelfeldmodul ASN-interne Zellköpfe angefügt. Mit Hilfe der internen Zellkopfe werden, wie in Fig. 1 erlautert, die Zellen Z durch das ATM-Koppelfeldmodul ASN gesteuert. Mit Hilfe des zweiten Zellkopfmodules RPCE werden die internen Zellköpfe von den vom ATM-Koppelfeldmodul ASN übermittelten Zellen Z entfernt. Zellen Z, die an das Teilnehmeranschlußmodul SLMP zu übermitteln sind, werden entpackt und über den lokalen Bus LB an ein Mikroprozessorsystem MPS im Sinne einer Bewertung gesteuert. Für die Generierung der internen Zellköpfe bzw. deren Entfernen unter Echtzeitbedingungen sind die hierfür erforderlichen zusätzlichen Daten in jeweils den Zellkopfmodulen HTCE, RPCE zugeordneten RAM-Speichern HRAM, RRAM gespeichert. Die beiden Zellkopfmodule HTCE, RPCE sind beispielsweise in jeweils einem ASIC realisiert.

Das Mikroprozessorsystem MPS ist durch einen Mikroprozessor CPU, einen Programmspeicher ROM und einem Arbeitsspeicher RAM gebildet. Der Mikroprozessor CPU ist beispielsweise durch einen Mikroprozessor SAB 80C186 der Fa. Siemens und der Programmspeicher ROM beispielsweise durch ein Flasch-EPROM realisiert.

Von dem ersten bzw. an das zweite Zellkopfmodul HTCE, RPCE werden die Zellen Z durch ein Anpassungsmodul SOD übermittelt. In dem Anpassungsmodul SOD werden die ankommenden Zellen Z von einem synchronen Übertragungsformat (STM-1) in ein asynchrones Übertragungsformat (ATM) umgesetzt. Hierbei werden die Informationen bereits parallel - z.B. 4 Bit parallel - übermittelt bzw. verarbeitet. Desweiteren wird in diesem Anpassungsmodul SOD die Verwürfelung bzw. Entwürfelung der zu übermittelten Daten bzw. Informationen durchgeführt. Das Anpassungsmodul SOD ist desweiteren mit einem Codierungsmodul CM verbunden, in dem die parallelen Signale in einen seriellen Informationsfluß und umgekehrt umgesetzt werden. Des weiteren wird eine Codeumwandlung durchgeführt. Hierbei werden die an der SDH-Teilnehmerschnittstelle SDH ankommenden NRZ (non return to zero) - codierten Signale in CMI (coded mark invertion) - codierte Signale umgesetzt. Für die Decodierung bzw. Decodierung in beide Richtungen wird eine Taktregenerierung in einem mit dem Codierungsmodul CM verbundenen Taktregenerierungsmodul TR durchgeführt. Im Taktregenerierungsmodul TR sind hierfür zusätzliche Filterschaltungen implementiert. Die Teilnehmerschnittstelle SDH stellt eine asymmetrische Schnittstelle mit einer seriellen, im Synchron-Transfer-Modus wirkenden Datenübertragung mit einer Geschwindigkeit von 155,52 MBit/s dar. Das Anpassungsmodul SOD ist desweiteren an den lokalen Bus LB angeschlossen, über den das Anpassungsmodul SOD durch das Mikroprozessorsystem MPS überwacht und gesteuert wird. Der lokale Bus LB ist desweiteren mit einer Steuerlogik STL verbunden. Mit Hilfe dieser Steuerlogik werden das Teilnehmeranschlußmodul SLMP in einen definierten Ausgangszustand gesetzt und fehler- und betriebszustandsanzeigende, optische Anzeigen gesteuert.

Der lokale Bus ist desweiteren mit einem Schnittstellenmodul IS verbunden, in dem im Sinne von Prüfungen und Tests des Teilnehmeranschlußmoduls SLMP eine V.24-Schnittstelle realisiert ist.

Desweiteren ist im Teilnehmeranschlußmodul SLMP ein weiteres Taktmodul TMS angeordnet, mit dessen Hilfe aus dem vom Taktmodul TM übermittelten Referenztaktsignalen rts die für die Taktsteuerung der beiden Zellkopfmodule HTCE, RPCE sowie des Anpassungsmoduls SOD und des Mikroprozessorsystems MPS erforderlichen Taktsignale ts abgeleitet und an diese übermittelt werden.

Mit Hilfe der im Programmspeicher ROM gespeicherten Programme werden im Teilnehmeranschlußmodul SLMP alle vom Kommunikationsmodul KM empfangenen Meldungen verwaltet, daß Auf- und Abbauen von ATM - Fest - oder Wählverbindungen durch Einstellen eines Umwertespeichers im ersten Zellkopfmodul HTCE gesteuert und die Komponenten des Teilnehmeranschlußmoduls SLMB überwacht. Desweiteren werden alle vermittlungs-, betriebs- und sicherungstechnischen Meldungen, die an die Komponenten der Vermittlungseinrichtung SB zu übermitteln sind oder von diesen übermittelt werden, Schicht 2 - gemäß gesichert - d.h. durch die HDLC-Übertragungsprozedur gesichert - und an die jeweiligen Komponenten über das ATM-Koppelfeldmodul ASN übermittelt. Hierzu ist ein entsprechender interner Zellkopf an die jeweiligen Zellen Z anzufügen.

## Patentansprüche

1. Modulares ATM-Kommunikationssystem zur Vermittlung von paketierten Zellen (Z) zwischen ATM-Kommunikationsendgeräten (KE) über Wahl- oder Festverbindungen mit
- zumindest einer Vermittlungseinrichtung (SB) mit
-- einem mit mehreren bidirektionalen Anschlüssen (A) versehenen, nach dem Asynchron-Transfer-Modus wirkenem ATM-Koppelfeldmodul (ASN), dessen Anschlüsse (A) mit
-- zumindest einem, zumindest eine SDH-Teilnehmerschnittstelle (SDH) realisierenden Teilnehmeranschlußmodul (SLMP) und
-- einem Kommunikationsmodul (KM) verbunden sind, sowie
-- mit einem die Taktsignale (ts) für das ATM-Koppelfeldmodul (ASN), die Teilnehmeranschlußmodule (SLMP) und das Kommunikationsmodul (KM) bereitstellenden Taktmodul (TM), und mit
- mit einer Steuerungseinrichtung (CB), die durch
-- einen die Vermittlungseinrichtung (SB) betriebstechnisch, vermittlungstechnisch und administrativ steuernden Personalcomputer (PC) gebildet ist, in dem
-- ein den Informationsaustausch mit der Vermittlungseinrichtung (SB) steuernden und überwachenden, mit einer der SDH-Teilnehemerschnittstellen (SDH) und dem Personalcomputer (PC) verbundener, prozessorgeteuerter Kommunikationsadapter (CA) vorgesehen ist,
- wobei im Kommunikationsmodul (KM) und in der Steuereinrichtung (CB) im Sinne einer Übermittlung von vermittlungs- sicherheits- und verwaltungstechnischen Informationen eine Transportschnittstelle, sowie eine vermittlungs-, sicherheits- und eine betriebstechnische Schnittstelle definiert ist.

2. ATM-Kommunikationssystem nach Anspruch 1,
**dadurch gekennzeichnet,**
daß das Kommunikationsmodul (KM) mit einem Bussystem (LB), an das
- ein erstes Zellkopfmodul (HTCE) mit einem zugeordneten RAM-Speicher HRAM), in dem zur Selbststeuerung der vermittlungs-, betriebs- und sicherheitstechnischen Informationen enthaltende Zellen (Z) durch das ATM-Koppelfeldmodul (ASN) vorgesehene, intere Zellköpfe gebildet und an die Zellen (Z) angefügt werden,
- ein zweites Zellkopfmodul (RPCE) mit einem zugeordneten RAM-Speicher (RRAM), in dem vor einer Übermittlung der vermittlungs-, betriebs- und sicherheitstechnische Informationen enthaltende Zellen (Z) an die Steuereinrichtung (CB) die internen Zellköpfe entfernt werden,
- ein die zu übermittlelnden vermittlungs-, betriebs- oder sicherheitstechnischen Informationen in Zellen (Z) einfügendes oder aus den übermittelten Zellen (Z) entnehmendes Segmentierungs- und Desegmentierungsmodul (SARE),
- und ein das Kommunikationsmodul (KM) steuerndes und überwachendes Mikroprozessorsystem (MPS) angeschlossen ist,
- und mit einem weitern Taktmodul (TMK) ausgestattet ist, in dem aus den vom Taktmodul (TM) übermittelten Referenztaktsignalen (rts) die Taktsignale (ts) für eine Übertragung an das ATM-Koppelfeldmodul (ASN) und die Steuereinrichtung (CB) abgeleitet und an die Komponenten des Kommunikationsmoduls (KM) verteilt werden.

3. ATM-Kommunikationssystem nach Anspruch 1 oder 2,
**dadurch gekennzeichnet**,
daß der Kommunikationsadapter (CA) durch
- eine eine SDH-Teilnehmerschnittstelle (SDH) realisierendes Segmentierung- und Desegmentierungsmodul (SARE) mit einem zugeordneten Zwischenspeicher (BUF),
- ein mit einer DMA-Steuerung (DMA) und im Sinne einer Datenentkopplung mit zwei lokalen Bussen (LB1,LB2) ausgestatteten Mikroprozessorsystem (MPS) und durch
- ein einen EISA-Busanschluß realisierendes EISA-Steuermodul (ECON) gebildet ist, wobei ein EISA-Kommunikatiosbus (EISA) im Personalcomputer (PC) angeordnet ist.

## Claims

1. Modular ATM communication system for the switching of packeted cells (Z) between ATM communication terminals (KE) over dial-up or fixed connections,
- having at least one switching device (SB) with
-- an ATM switching matrix module (ASN), which is provided with a plurality of bidirectional terminal connections (A), operates using the Asynchronous Transfer Mode and the terminal connections (A) of which are connected to
-- at least one subscriber line module (SLMP), realizing at least one SDH subscriber interface (SDH), and
-- to a communication module (KM), and
-- with a clock module (TM), providing the clock signals (ts) for the ATM switching matrix module (ASN), the subscriber line modules (SLMP) and the communication module (KM), and
- having a control device (CB), which is formed by
-- a personal computer (PC), which controls the switching device (SB) in terms of operation, switching and administration and in which
-- there is provided a processor-controlled communication adaptor (CA), controlling and monitoring the exchange of information with the switching device (SB) and connected to one of the SDH subscriber interfaces (SDH) and to the personal computer (PC),
- to allow transmission of switching, dependability and administration information, there being defined in the communication module (KM) and in the control device (CB) a transport interface, and also a switching interface, a dependability interface and an operation interface.

2. ATM communication system according to Claim 1, characterized in that the communication module (KM) is equipped with a bus system (LB), to which
- there is connected a first cell header module (HTCE) with an assigned RAM memory (HRAM), in which internal cell headers provided for the self-control of the cells (Z) containing switching, operation and dependability information by the ATM switching matrix module (ASN) are formed and are attached to the cells (Z),
- there is connected a second cell header module (RPCE) with an assigned RAM memory (RRAM), in which the internal cell headers are removed before a transmission of the cells (Z) containing switching, operation and dependability information to the control device (CB),
- there is connected a segmentation and desegmentation module (SARE), inserting into cells (Z) the switching, operation or dependability information to be transmitted or removing such information from the transmitted cells (Z),
- and there is connected a microprocessor system (MPS), controlling and monitoring the communication module (KM),
- and is equipped with a further clock module (TMK), in which the clock signals (ts) for a transmission to the ATM switching matrix module (ASN) and the control device (CB) are derived from the reference clock signals (rts) transmitted from the clock module (TM) and are distributed to the components of the communication module (KM).

3. ATM communication system according to Claim 1 or 2, characterized in that the communication adaptor (CA) is formed by
- a segmentation and desegmentation module (SARE), which has an assigned buffer memory (BUF) and realizes an SDH subscriber interface (SDH),
- a microprocessor system (MPS), equipped with a DMA controller (DMA) and, to allow data isolation, with two local buses (LB1, LB2), and by
- an EISA control module (ECON), realizing an EISA bus connection, an EISA communication bus (EISA) being arranged in the personal computer (PC).

## Revendications

1. Système de communication ATM à structure modulaire pour la commutation de cellules (Z) mises en paquets entre des terminaux de communication ATM (KE) par l'intermédiaire de liaisons commutées ou fixes, comportant
- au moins un dispositif de commutation (SB) ayant
-- un module de réseau de connexion ATM (ASN) qui est muni de plusieurs raccordements (A) bidirectionnels, qui fonctionne selon le mode de transfert asynchrone et dont les raccordements (A) sont reliés
-- au moins à un module de raccordement d'abonné (SLMP) mettant en oeuvre au moins une interface d'abonné SDH (SDH) et
-- à un module de communication (KM), ainsi qu'
-- un module d'horloge (TM) fournissant les signaux d'horloge (ts) pour le module de réseau de connexion ATM (ASN), pour les modules de raccordement d'abonnés (SLMP) et pour le module de communication (KM),
- et un dispositif de commande (CB)
-- qui est formé par un ordinateur personnel (PC) qui commande l'exploitation, la commutation et la gestion du dispositif de commutation (SB) et dans lequel
-- il est prévu un adaptateur de communication (CA) commandé par processeur, commandant et surveillant l'échange d'informations avec le dispositif de commutation (SB) et relié à l'une des interfaces d'abonnés SDH (SDH) et à l'ordinateur personnel (PC),
- une interface de transport ainsi qu'une interface de commutation, de sécurité et d'exploitation étant définies dans le module de communication (KM) et dans le dispositif de commande (CB) en vue d'une transmission d'informations de commutation, de sécurité et de gestion.

2. Système de communication ATM selon la revendication 1,
caractérisé par le fait que
le module de communication (KM) est équipé d'un système de bus (LB) auquel sont raccordés
- un premier module d'en-têtes de cellules (HTCE) avec une mémoire RAM (HRAM) associée dans laquelle des en-têtes de cellules internes, prévus pour le guidage automatique des cellules (Z) contenant des informations de commutation, d'exploitation et de sécurité à travers le module de réseau de connexion ATM (ASN) sont formés et sont adjoints aux cellules (Z),
- un deuxième module d'en-têtes de cellules (RPCE) avec une mémoire RAM (RRAM) associée dans laquelle les en-têtes de cellules internes sont enlevés avant une transmission des cellules (Z) contenant des informations de commutation, d'exploitation et de sécurité au dispositif de commande (CB),
- un module de segmentation et de désegmentation (SARE) insérant dans des cellules (Z) les informations de commutation, d'exploitation ou de sécurité ou extrayant celles-ci des cellules (Z) transmises,
- et un système à microprocesseur (MPS) commandant et surveillant le module de communication (KM),
- et d'un autre module d'horloge (TMK) dans lequel les signaux d'horloge (ts) pour une transmission au module de réseau de connexion ATM (ASN) et au dispositif de commande (CB) sont déduits des signaux d'horloge de référence (rts) transmis par le module d'horloge (TM) et sont distribués aux éléments du module de communication (KM).

3. Système de communication ATM selon la revendication 1 ou 2,
caractérisé par le fait que
l'adaptateur de communication (CA) est formé par
- un module de segmentation et de désegmentation (SARE) mettant en oeuvre une interface d'abonné SDH (SDH) avec une mémoire temporaire (BUF) associée,
- un système à microprocesseur (MPS) équipé d'une commande DMA (DMA) et de deux bus locaux (LB1, LB2) en vue d'un découplage de données et
- un module de commande EISA (ECON) mettant en oeuvre un raccordement de bus EISA, un bus de communication EISA (EISA) étant agencé dans l'ordinateur personnel (PC).
